# EUROPEAN PATENT APPLICATION

(11) **EP 4 696 383 A1**
(43) Date of publication of application: **18.02.2026**
(21) Application number: 24792549.8
(22) Date of filing: 08.04.2024
(51) Int. Cl.: A62C 35/10, A62C 3/16, A62D 1/06, B32B 7/022

(54) **FIRE EXTINGUISHING BODY AND FIRE EXTINGUISHING DEVICE COMPRISING FIRE EXTINGUISHING BODY**

(30) Priority: 20.04.2023 JP 2023069487
(71) Applicant: Toppan Holdings Inc., Tokyo 110-0016 (JP)
(72) Inventor: ISOWA, Manami, Tokyo 110-0016 (JP); SHIINE, Yasuharu, Tokyo 110-0016 (JP); KUROKAWA, Masato, Tokyo 110-0016 (JP); KAKEGAWA, Shunta, Tokyo 110-0016 (JP); HONJO, Yusaku, Tokyo 110-0016 (JP)
(74) Representative: Pritzlaff, Stefanie Lydia
(86) International application number: PCT/JP2024/014308
(87) International publication number: WO 2024/219274

(57) **Abstract**

Provided is a sheet-like fire extinguishing body including a substrate layer and a fire extinguishing layer layered with each other, in which a loop stiffness value of the fire extinguishing body is 50 mN or more, and a ratio of a thickness of the fire extinguishing layer to a thickness of the substrate layer is 80% or more.

## Description

### Technical Field

The present disclosure relates to a fire extinguishing body and a fire extinguishing device comprising the fire extinguishing body.

### Background Art

For the problem of ignition and fire, Patent Document 1 proposes the use of a fire extinguishing liquid and a fire extinguisher.

Patent Document 2 proposes an automatic fire extinguishing device dropped from a helicopter. Patent Document 3 proposes an aerosol fire extinguishing device.

### Citation List

### Patent Literature

[Patent Document 1] Japanese Unexamined Patent Publication No. H9-276440
[Patent Document 2] Japanese Unexamined Patent Publication No. 2015-6302
[Patent Document 3] Japanese Unexamined Patent Publication No. 2017-080023

### Summary of Invention

### Technical Problem

A fire extinguishing body, such as that exemplified in Patent Document 3, is a molded body having a predetermined shape, unlike a powdered fire extinguishing material. In the mass production of such a molded fire extinguishing body, it is necessary to consider not only the fire extinguishing performance of the fire extinguishing body but also its processability (mass productivity).

An object of an aspect of the present disclosure is to provide a fire extinguishing body and a fire extinguishing device including the fire extinguishing body, that can be manufactured with high productivity and can exhibit good fire extinguishing performance.

### Solution to Problem

The inventors of the present disclosure have found that when the loop stiffness value of a fire extinguishing body is too small, problems are likely to occur in the processing of the fire extinguishing body. For example, when a sheet-like fire extinguishing body is manufactured by a roll-to-roll method, a problem of deflection of the fire extinguishing body was found depending on its loop stiffness value. As a countermeasure to the above-mentioned problem, thickening the substrate layer can be considered to improve the loop stiffness value of the fire extinguishing body. It was also found that this could make the fire extinguishing performance of the fire extinguishing body to be adversely affected. A fire extinguishing body according to an aspect of the present disclosure and based on the above findings, is a sheet-like fire extinguishing body including a substrate layer and a fire extinguishing layer layered with each other, in which a loop stiffness value of the fire extinguishing body is 50 mN or more, and a ratio of a thickness of the fire extinguishing layer to a thickness of the substrate layer is 80% or more.

A value obtained by subtracting a loop stiffness value of the substrate layer from the loop stiffness value of the fire extinguishing body may be 125 mN or less. In this case, cracks are less likely to occur in the fire extinguishing layer.

The fire extinguishing layer may include a fire extinguishing agent and a binder, and the binder may include a urethane resin. In this case, cracks are less likely to occur in the fire extinguishing layer favorably. The content of the urethane resin may be 50% by mass or more, based on the total amount of the binder. Here, an aspect of the present disclosure may be a fire extinguishing device including the above-described fire extinguishing body and a packaging bag accommodating the fire extinguishing body, in which a resin film included in the packaging bag includes the fire extinguishing agent. Using such a fire extinguishing device and the packaging bag makes it possible to maintain the performance of the fire extinguishing layer over a long period and to improve the fire extinguishing performance.

The fire extinguishing layer may include a fire extinguishing agent and a binder, and the binder may include a polyvinyl butyral resin and an epoxy resin. In this case, by adjusting the ratio of the polyvinyl butyral resin and the epoxy resin in the binder, the stiffness and the like of the fire extinguishing layer can be easily adjusted.

The polyvinyl butyral resin may be a main component of the binder, and a content of the epoxy resin may be 5% by mass or more and 45% by mass or less, based on a total amount of the binder. In this case, cracks are less likely to occur in the fire extinguishing layer. Here, an aspect of the present disclosure may be a fire extinguishing device including the above-described fire extinguishing body and a packaging bag accommodating the fire extinguishing body, in which the content of the epoxy resin is 20% by mass or more, based on the total amount of the binder, and a resin film included in the packaging bag includes a fire extinguishing agent. Using such a fire extinguishing device and the packaging bag makes it possible to maintain the performance of the fire extinguishing layer over a long period and to improve the fire extinguishing performance.

The substrate layer may include a plurality of resin layers, and among the plurality of resin layers, a resin layer farther from the fire extinguishing layer, lower a melting point may have. In this case, since among the plurality of resin layers a resin layer farther from the fire extinguishing layer lower a melting point has, adverse effects of the substrate layer on the fire extinguishing performance of the fire extinguishing layer can be suppressed. Further, a thickness of the fire extinguishing body may be 50 µm or more and 500 µm or less, and a thickness of the substrate layer may be 30 µm or more and 150 µm or less. Alternatively, a ratio of the thickness of the fire extinguishing layer to the thickness of the substrate layer may be 80% or more and 200% or less. A loop stiffness value of the fire extinguishing layer may be 60 mN or more and 200 mN or less.

### Advantageous Effects of Invention

According to the present disclosure, it is possible to provide a fire extinguishing body and a fire extinguishing device including the fire extinguishing body, that can be manufactured with high productivity and can exhibit good fire extinguishing performance

### Brief Description of Drawings

[FIG. 1] Fig. 1 is a schematic external view of a fire extinguishing device according to an embodiment.
[FIG. 2] Fig. 2 is a schematic cross-sectional view of the fire extinguishing device according to the embodiment, and is a cross-sectional view taken along line II-II in Fig. 1.

### Description of Embodiments

Hereinafter, embodiments of the present disclosure will be described in detail. However, the present disclosure is not limited to the following embodiments.

### [Fire extinguishing body]

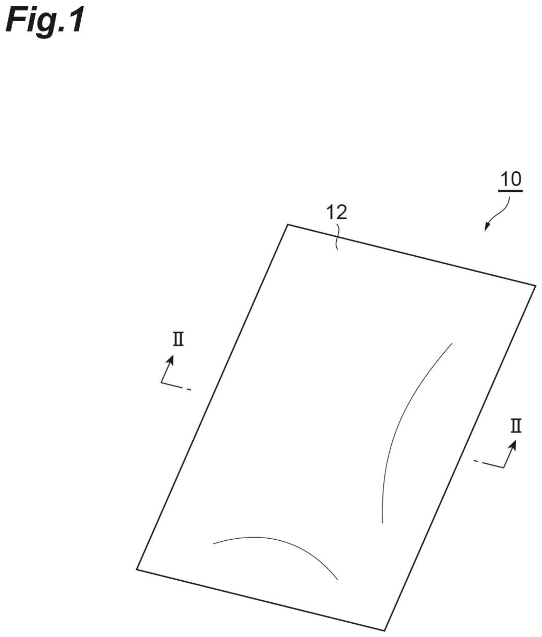

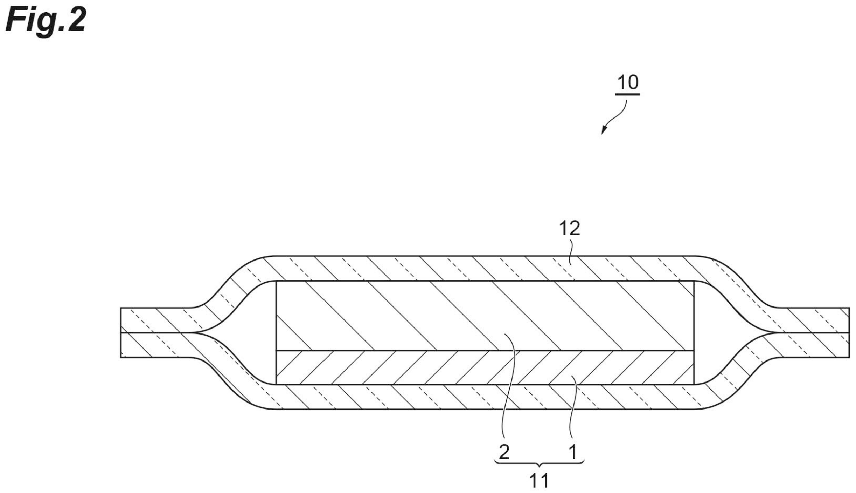

Fig. 1 is a schematic external view of a fire extinguishing device according to an embodiment. Fig. 2 is a schematic cross-sectional view of the fire extinguishing device according to the embodiment, and is a cross-sectional view taken along line II-II in Fig. 1. The fire extinguishing device 10 shown in Figs. 1 and 2 is a sheet-like member for preventing the occurrence and spread of a fire, for example. The fire extinguishing device 10 is provided in advance, for example, above or near an object that may ignite, or the like. When a fire starts from the object, the fire extinguishing device 10 performs initial fire extinguishing according to a mechanism of action described later. The object that may ignite is, for example, an electric wire, a switchboard, a distribution board, a control panel, a storage battery (such as a lithium-ion battery), building materials such as building wallpaper and ceiling materials, a lithium-ion battery collection box, a trash can, automobile-related members, an electrical outlet, an outlet cover, and the like. For example, in the above-mentioned object having the fire extinguishing device 10, initial fire extinguishing is automatically performed for ignition in the object. Therefore, an object having the fire extinguishing device 10 can be referred to as a device having an automatic fire extinguishing function.

The fire extinguishing device 10 includes a fire extinguishing body 11 and a packaging bag 12.

The fire extinguishing body 11 is a sheet-like member that functions as a main part of the fire extinguishing device 10, and includes a substrate layer 1 and a fire extinguishing layer 2 layered with each other. The thickness of the fire extinguishing body 11 is, for example, 50 µm or more and 500 µm or less. The thickness of the fire extinguishing body 11 may be, for example, 80 µm or more, 110 µm or more, 135 µm or more, 170 µm or more, 195 µm or more, 220 µm or more, or 250 µm or more, and may be 450 µm or less, 400 µm or less, 350 µm or less, 300 µm or less, 280 µm or less, or 250 µm or less. The loop stiffness value of the fire extinguishing body 11 is, for example, 50 mN or more and 350 mN or less. In this case, cracks are less likely to occur in the fire extinguishing body 11 (particularly, the fire extinguishing layer 2 described later). The loop stiffness value may be 60 mN or more, 75 mN or more, 100 mN or more, 125 mN or more, or 150 mN or more, and may be 300 mN or less, 250 mN or less, 200 mN or less, or 175 mN or less. The loop stiffness value of the fire extinguishing body 11 corresponds to the stress when the fire extinguishing body 11 is bent into a loop shape and compressed in the diameter direction of the loop. In general, the larger the loop stiffness value of a film, the stronger the stiffness of the film. The loop stiffness value of the fire extinguishing body 11 can be obtained, for example, by using a loop stiffness tester described in Examples later, and the like.

### (Substrate Layer)

The substrate layer 1 is a sheet-like member that serves as a base for the fire extinguishing layer 2, and is, for example, a cut piece of a film. The thickness of the substrate layer 1 can be appropriately selected according to the performance of the fire extinguishing device 10, the allowable size of the fire extinguishing device 10, and the like. For example, if the substrate layer 1 is thick, it is easy to obtain high strength and a high loop stiffness value of the fire extinguishing device 10, and it is also easy to take a form with high planarity. Therefore, the thicker the substrate layer 1, the easier it is to handle the fire extinguishing device 10. If the substrate layer 1 is thin, it becomes easier to provide the fire extinguishing device 10 in a narrow space. In addition, since a hole is easily formed in the substrate layer 1 in a short time, the fire extinguishing start time can be shortened. From the above viewpoints, the thickness of the substrate layer 1 may be 30 µm or more and 150 µm or less, 30 µm or more and 100 µm or less, 30 µm or more and 75 µm or less, 50 µm or more and 150 µm or less, 50 µm or more and 100 µm or less, or 50 µm or more and 75 µm or less.

From the viewpoint of making the loop stiffness value of the fire extinguishing body 11 50 mN or more, the loop stiffness value of the substrate layer 1 needs to be increased to some extent. On the other hand, from the viewpoint of reducing the occurrence of cracks in the fire extinguishing layer 2, the loop stiffness value of the substrate layer 1 needs to be appropriately suppressed. From the above viewpoints, a value obtained by subtracting the loop stiffness value of the substrate layer 1 from the loop stiffness value of the fire extinguishing body 11 is, for example, 125 mN or less. The value may be 124 mN or less, 100 mN or less, 80 mN or less, 60 mN or less, 40 mN or less, 34 mN or less, 22 mN or less, 20 mN or less, or 18 mN or less. The lower limit of the value obtained by subtracting the loop stiffness value of the substrate layer 1 from the loop stiffness value of the fire extinguishing body 11 is not particularly limited, and may be 0 mN or more. The loop stiffness value of the substrate layer 1 is, for example, 30 mN or more and 300 mN or less.

As the substrate layer 1, for example, a resin layer is selected. Examples of the material included in the resin layer include polyolefin-based resins (low-density polyethylene resin (LDPE), linear low-density polyethylene resin (LLDPE), medium-density polyethylene resin (MDPE), polypropylene resin (PP), cycloolefin polymer (COP), cast polypropylene resin (CPP), etc.), polyester-based resins (PET, etc.), fluorine-based resins (PTFE, ETFE, EFEP, PFA, FEP, PCTFE, etc.), PVC, PVA, acrylic-based resin, epoxy-based resin, polyamide, and polyimide. In this case, since the temperature of a flame is generally about 700°C or more and 900°C or less, a hole can be made in the substrate layer 1 during fire extinguishing by the fire extinguishing device 10. The substrate layer 1 may include a fire extinguishing agent described later. The substrate layer 1 may be composed of one resin layer made of the above-mentioned material, or may be composed of a plurality of resin layers. The plurality of resin layers each may be made of different materials. When the substrate layer 1 is composed of a plurality of resin layers, the resin layers may be bonded by an adhesive (adhesive layer). Examples of the adhesive include acrylic-based adhesives, epoxy-based adhesives, silicone-based adhesives, polyolefin-based adhesives, urethane-based adhesives, polyvinyl ether-based adhesives, or those synthetic-based adhesives. From the viewpoint of exhibiting the fire extinguishing performance of the fire extinguishing layer 2, among the resin layers in the substrate layer 1, a resin layer farther from the fire extinguishing layer 2, lower a melting point may have. The material of the resin layer is, for example, a polyolefin-based resin.

The above-mentioned resin layer may have heat-fusibility (heat-sealability). A resin layer having heat-fusibility can be referred to as a heat-fusible layer. The heat-fusible layer is provided, for example, in a resin layer close to the fire extinguishing layer 2 in the substrate layer 1. When the substrate layer 1 includes a heat-fusible layer, the sealing portion of the packaging bag 12 can be referred to as a heat-sealing portion. Examples of the resin having heat-fusibility include a polyolefin-based resin. That is, the resin layer may include a polyolefin-based resin. Examples of the polyolefin-based resin include not only the above-mentioned polyolefin-based resin but also polyethylene-based resins such as ethylene-vinyl acetate copolymer and ethylene-α-olefin copolymer, and polypropylene-based resins such as propylene-ethylene random copolymer, propylene-ethylene block copolymer, and propylene-α-olefin copolymer. Among these, from the viewpoints of heat-sealability, water vapor transmission rate, and the like, the polyolefin-based resin may include LDPE, LLDPE, or cast polypropylene resin (CPP). These resins have transparency. Therefore, it is possible to visually inspect the fire extinguishing layer 2 through the substrate layer 1. Thus, it is also easy to check the replacement time of the fire extinguishing device 10.

When a heat-fusible layer is not provided, an adhesive can be used for joining the resin layers each other included in the substrate layer 1. Examples of the adhesive include acrylic-based adhesives, epoxy-based adhesives, silicone-based adhesives, polyolefin-based adhesives, urethane-based adhesives, polyvinyl ether-based adhesives, or those synthetic-based adhesives. Among these, from the viewpoints of adhesion at high temperature and high humidity of 85°C-85% RH, low cost, and the like, the adhesive may be an epoxy-urethane synthetic-based adhesive.

The substrate layer 1 may include a water vapor barrier layer. The water vapor barrier layer may be provided, for example, as an intermediate layer of the substrate layer 1. When the substrate layer 1 includes a water vapor barrier layer, it becomes easy to maintain a water vapor barrier property to such an extent that the properties of the fire extinguishing layer 2 do not change significantly, regardless of the installation location and use environment of the fire extinguishing device 10. The water vapor transmission rate (under the conditions of 40°C/90% RH in accordance with JIS K 7129) of the water vapor barrier layer is not particularly limited because it can be designed according to the type of the fire extinguishing agent included in the fire extinguishing layer 2, but it can be 10 g/m²/day or less, and may be 1 g/m²/day or less. From the viewpoint of adjusting the water vapor transmission rate, examples of the water vapor barrier layer include a polyester resin layer (e.g., a PET layer) including a metal oxide vapor-deposited layer such as an alumina vapor-deposited layer or a silica vapor-deposited layer, and a metal foil such as an aluminum foil. When the water vapor barrier layer includes a metal oxide vapor-deposited layer, the metal oxide vapor-deposited layer may be provided, for example, in the vicinity of the fire extinguishing layer 2.

### (Fire Extinguishing Layer)

The fire extinguishing layer 2 is a sheet-like molded body of a composition for forming a fire extinguishing layer, which includes a fire extinguishing agent and a binder, and is provided on the substrate layer 1. Molding the fire extinguishing agent by using the binder makes the properties of the fire extinguishing agent to be easily maintained. This can reduce the replacement frequency of the fire extinguishing device 10. The larger the thickness of the fire extinguishing layer 2, the more the fire extinguishing performance of the fire extinguishing device 10 likely to improve. The fire extinguishing ability exhibited by the fire extinguishing layer 2 is exerted not only on a heat source such as a flame but also on the substrate layer 1 heated by the heat source. For this reason, in one embodiment, the balance between the thickness of the substrate layer 1 and the thickness of the fire extinguishing layer 2 in the fire extinguishing body **11** is also considered. The ratio of the thickness of the fire extinguishing layer 2 to the thickness of the substrate layer 1 is, for example, 80% or more, 120% or more, 160% or more, or 180% or more, and is 400% or less, 350% or less, 300% or less, or 240% or less. The thickness of the fire extinguishing layer 2 is, for example, 40 µm or more, 60 µm or more, 90 µm or more, 120 µm or more, or 150 µm or more, and is 250 µm or less, 220 µm or less, 200 µm or less, or 180 µm or less. The composition for forming a fire extinguishing layer may include a liquid medium in addition to the fire extinguishing agent and the binder.

The fire extinguishing agent can perform fire extinguishing by generating aerosol upon combustion. The fire extinguishing agent can include at least one of an organic salt and an inorganic salt. The organic salt and the inorganic salt may be salts having hygroscopicity.

Examples of the organic salt that functions as the fire extinguishing agent include potassium salts, sodium salts, and ammonium salts. Potassium salts can be used as the organic salt. Examples of the organic potassium salt include potassium carboxylates such as potassium acetate, potassium citrate (monopotassium citrate, dipotassium citrate, or tripotassium citrate), potassium tartrate, potassium lactate, potassium oxalate, and potassium maleate. From the viewpoint of usefulness for the negative catalytic effect on combustion, the organic potassium salt may be potassium acetate or potassium citrate.

Examples of the inorganic salt that functions as the fire extinguishing agent include potassium salts, and sodium salts. Examples of the inorganic potassium salt include potassium tetraborate, potassium carbonate, potassium bicarbonate, potassium dihydrogen phosphate, and dipotassium hydrogen phosphate. Among these, from the viewpoint of usefulness for the negative catalytic effect on combustion, the inorganic salt may be potassium bicarbonate.

The organic salt and the inorganic salt may be granular. The average particle diameter D50 of the organic salt and the inorganic salt may be 1 µm or more and 100 µm or less, and may be 3 µm or more and 40 µm or less. When the average particle diameter D50 is equal to or greater than the above lower limit, it is easy to disperse in the system, and when the average particle diameter D50 is equal to or less than the above upper limit, the stability when made into a coating liquid is likely to be improved, and the smoothness of the coated surface is likely to be improved. The average particle diameter D50 can be calculated by wet measurement using a laser diffraction particle size distribution analyzer.

From the viewpoint of promoting the generation of aerosol from the salt due to the supply of thermal energy, the fire extinguishing agent may include a compound having an oxidizing action. Examples of the compound having an oxidizing action include chlorates such as potassium chlorate, sodium chlorate, strontium chlorate, ammonium chlorate, and magnesium chlorate. From the viewpoint of promoting aerosol generation, potassium chlorate may be used.

The content of the fire extinguishing agent included in the fire extinguishing layer 2 may be 70% by mass or more and 97% by mass or less, and may be 85% by mass or more and 92% by mass or less, based on the solid content weight included in the fire extinguishing layer 2. When the content of the fire extinguishing agent is 97% by mass or less, deliquescence of the salt is less likely to occur. In addition, the film-forming property of the composition for forming a fire extinguishing body can be improved. When the content of the fire extinguishing agent is 70% by mass or more, the fire extinguishing layer 2 easily exhibits sufficient fire extinguishing ability. The solid content weight included in the fire extinguishing layer 2 corresponds to, for example, the total amount of the fire extinguishing agent and the binder.

The binder is a material used for molding the fire extinguishing agent. The content of the binder included in the fire extinguishing layer 2 may be 2% by mass or more and 20% by mass or less, and may be 4% by mass or more and 15% by mass or less, based on the solid content weight included in the fire extinguishing layer 2. When the content of the binder is 20% by mass or less, the surface smoothness of the coating film after drying is likely to be improved. When the content of the binder is 2% by mass or more, the roll-to-roll coating suitability when applying the fire extinguishing layer 2 is likely to be improved.

As the binder, a thermoplastic resin and a thermosetting resin can be used. Examples of the thermoplastic resin include polyolefin-based resins such as polypropylene-based resin, polyethylene-based resin, polybutene-based resin, and polypentene-based resin; polystyrene-based resin; acrylonitrile-butadiene-styrene-based resin; methyl methacrylate-butadiene-styrene-based resin; ethylene-vinyl acetate resin; ethylene-propylene resin; polycarbonate-based resin; polyphenylene ether-based resin; acrylic-based resin; polyamide-based resin; polyvinyl chloride-based resin; polyvinyl alcohol resin (PVA); and polyvinyl butyral resin (PVB). Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), and fluoro-rubber (FKM, FZ), and urethane rubber (U); urethane-based resin; phenol-based resin; epoxy-based resin; and polyvinyl ether (PMVE)-maleic anhydride resin. The binder may include one of the above resins, or may include a plurality of types. The binder may include a curing agent component. From the viewpoint of property stability, the binder may include any additives such as a surfactant, a silane coupling agent, and an anti-blocking agent.

From the viewpoint of the flexibility and the like of the fire extinguishing device 10, the binder may include a urethane resin, or may include a polyvinyl butyral resin and an epoxy resin. From the viewpoint of reducing the occurrence of cracks in the fire extinguishing layer 2 and the like, the main component of the binder may be a urethane resin. When the binder includes a urethane resin, the content of the urethane resin may be 50% by mass or more, 60% by mass or more, 70% by mass or more, 80% by mass or more, 90% by mass or more, or 100% by mass, based on the total amount of the binder. When the binder includes a polyvinyl butyral resin and an epoxy resin, from the viewpoint of the processability and the like of the fire extinguishing body 11, the polyvinyl butyral resin may be the main component of the binder. In this case, the content of the epoxy resin is, for example, 5% by mass or more and 45% by mass or less, based on the total amount of the binder. The content of the epoxy resin may be, for example, 8% by mass or more, 15% by mass or more, or 20% by mass or more, and may be 40% by mass or less, 30% by mass or less, or 25% by mass or less, based on the total amount of the binder.

Examples of the liquid medium include organic solvents. Examples of the organic solvent include water-soluble solvents, for example, alcohols such as methanol, ethanol, isopropyl alcohol, and n-propyl alcohol; ketones such as acetone and methyl ethyl ketone; glycols such as ethylene glycol and diethylene glycol; and glycol ethers such as N-methylpyrrolidone, tetrahydrofuran, and butyl cellosolve. The liquid medium may include one of the above solvents, or may include a plurality of types. From the viewpoint of being used with a salt, the liquid medium may be an alcohol-based solvent such as ethanol. The amount of the liquid medium is not particularly limited, but can be 30% by mass or more and 70% by mass or less, based on the total amount of the fire extinguishing layer 2.

The fire extinguishing layer 2 may include other components including at least one of a surfactant, a silane coupling agent, an anti-blocking agent, a colorant, an antioxidant, a flame retardant, an inorganic filler, a fluidity-imparting agent, a moisture-proofing agent, a dispersant, a UV absorber, a flexibility-imparting agent, and a catalyst. These other components can be appropriately selected according to the type or the like of the fire extinguishing agent, the binder, or the liquid medium. The content of the other components included in the fire extinguishing layer 2 is, for example, 10% by mass or less, based on the total amount of the fire extinguishing layer 2.

An example of a method for manufacturing the fire extinguishing body 11 is as follows. First, a coating liquid of a composition for forming a fire extinguishing body, which includes a fire extinguishing agent, a binder, and a liquid medium is applied onto a surface to be treated of the substrate layer 1. Subsequently, the coating liquid is dried. Thereby, the fire extinguishing layer 2 is formed on the substrate layer 1. The application of the composition for forming a fire extinguishing body can be performed, for example, by a wet coating method. Examples of the wet coating method include a gravure coating method, a comma coating method, a spray coating method, a dip coating method, a curtain coating method, a spin coating method, a sponge roll method, a die coating method, and painting with a brush.

### (Packaging Bag)

The packaging bag 12 is a bag-like member used for maintaining the performance of the fire extinguishing layer 2 over a long period. The packaging bag 12 is formed, for example, by heat sealing four sides of two resin films. Examples of the resin constituting the resin film include polyolefin-based resins (LLDPE, PP, COP, CPP, etc.), polyester-based resins (PET, etc.), fluorine-based resins (PTFE, ETFE, EFEP, PFA, FEP, PCTFE, etc.), PVC, PVA, acrylic-based resin, epoxy-based resin, polyamide, and polyimide. The resin film may be composed of one of the above resins, or may be composed of a combination of two or more types. When these resins are used, they melt due to the heat of a flame (generally about 700°C to 900°C), making it easy to expose the internal substrate layer 1 and fire extinguishing layer 2. The resin film may also include the above-mentioned fire extinguishing agent. By selecting a transparent material as the resin, the substrate layer 1 and the fire extinguishing layer 2 can be visually recognized through the packaging bag 12. In addition, figures, patterns, characters, colors, and the like may be printed on at least a part of the packaging bag 12. From the viewpoint of maintaining the aesthetic appearance of the packaging bag 12, the fire extinguishing layer 2 of the fire extinguishing body 11 may include a urethane resin as a binder. Alternatively, when the fire extinguishing layer 2 includes a polyvinyl butyral resin and an epoxy resin, the ratio of the content of the epoxy resin to the total amount of the binder may be, for example, 20% by mass or more.

The water vapor transmission rate (under the conditions of 40°C /90% RH in accordance with JIS K 7129) of the resin film is designed according to the type of the fire extinguishing body 20. For example, the water vapor transmission rate of the resin film is 10.0 g/m²/day or less, or 1.0 g/m²/day or less. From the viewpoint of adjusting the water vapor transmission rate, the resin film may be provided with a vapor-deposited layer (alumina vapor-deposited layer or silica vapor-deposited layer) having a water vapor barrier property.

Hereinafter, the actions and effects exhibited by the fire extinguishing device 10 according to the above-described embodiment will be described. First, from the viewpoint of mass productivity, it is considered that the fire extinguishing body 11 included in the fire extinguishing device 10 according to one embodiment is manufactured, for example, by a roll-to-roll method. In such a case, after a dried composition for forming a fire extinguishing body is formed on a film unwound from a roll, a cutting process is performed on the film. Thereby, the fire extinguishing body 11 having the substrate layer 1 and the fire extinguishing layer 2 cut to a predetermined dimension is formed. Here, during the manufacturing of the fire extinguishing body 11 by the roll-to-roll method, depending on the loop stiffness value of the fire extinguishing body 11, deflection of the film on which the dried composition is formed may occur. In a case where such deflection occurs, the film may be improperly cut. This raises a concern that the dimensional accuracy of the fire extinguishing body 11 after cutting may vary.

In response to such a concern, the loop stiffness value of the fire extinguishing body 11 according to one embodiment is 50 mN or more. Thereby, for example, even when the fire extinguishing body 11 is manufactured by a manufacturing method in which a film cutting process such as a roll-to-roll method is performed, deflection of the film is less likely to occur. For this reason, variations in the dimensional accuracy of the fire extinguishing body 11 after cutting can be suppressed. Therefore, the fire extinguishing body 11 can be manufactured by a method with high mass productivity. For example, the thicker the substrate layer 1, the more easily the substrate layer 1 itself is heated, and melting of the substrate layer 1 itself, combustion of the substrate layer 1 itself, and the like may occur. In the former case, heat absorption accompanying the melting of the substrate layer 1 may hinder the propagation of thermal energy of the fire extinguishing agent, and the fire extinguishing performance of the fire extinguishing layer 2 may not be exhibited well. In the latter case, the fire extinguishing layer 2 extinguishes not only the fire source but also the substrate layer 1, which may cause a problem that the extinguishing of the fire source becomes insufficient. From the viewpoint of suppressing the occurrence of such a problem, the ratio of the thickness of the fire extinguishing layer 2 to the thickness of the substrate layer 1 is 80% or more. Thereby, adverse effects of the substrate layer 1 on the fire extinguishing performance of the fire extinguishing layer 2 can be suppressed. Therefore, according to one embodiment, the fire extinguishing body 11 capable of exhibiting favorably fire extinguishing performance can be manufactured with high productivity.

In one embodiment, a value obtained by subtracting the loop stiffness value of the substrate layer 1 from the loop stiffness value of the fire extinguishing body 11 is 125 mN or less. In this case, cracks are less likely to occur in the fire extinguishing layer 2. Thereby, a loss of aesthetic appearance and the like of the fire extinguishing body 11 due to the occurrence of such cracks can be suppressed.

In one embodiment, the fire extinguishing layer 2 may include a fire extinguishing agent and a binder, and the binder may include a urethane resin. In this case, the occurrence of cracks in the fire extinguishing layer 2 can be favorably suppressed. Therefore, it is possible to realize an improvement in the fire extinguishing performance of the fire extinguishing body 11 by increasing the thickness of the fire extinguishing layer 2.

In one embodiment, the fire extinguishing layer 2 may include a fire extinguishing agent and a binder, and the binder may include a polyvinyl butyral resin and an epoxy resin. In this case, by adjusting the ratio of the polyvinyl butyral resin and the epoxy resin in the binder, the stiffness and the like of the fire extinguishing layer 2 can be easily adjusted.

In one embodiment, the content of the epoxy resin may be 5% by mass or more and 45% by mass or less, based on the total amount of the binder. In this case, cracks are less likely to occur in the fire extinguishing layer 2.

In one embodiment, the fire extinguishing device 10 includes the fire extinguishing body 11 and a packaging bag 12 that encloses the fire extinguishing body 11. In this case, by enclosing the fire extinguishing body 11 in the packaging bag 12, even when the fire extinguishing agent has deliquescence, deterioration of the fire extinguishing agent can be suppressed. For this reason, the fire extinguishing body 11 can exhibit fire extinguishing performance over a long period.

The fire extinguishing body according to an aspect of the present disclosure is as described in the following [1] to [12]. Hereinafter, these have been described in detail based on the above-described embodiment.
[1] A sheet-like fire extinguishing body including a substrate layer and a fire extinguishing layer layered with each other, wherein a loop stiffness value of the fire extinguishing body is 50 mN or more, and a ratio of a thickness of the fire extinguishing layer to a thickness of the substrate layer is 80% or more.
[2] The sheet-like fire extinguishing body according to [1], wherein a value obtained by subtracting a loop stiffness value of the substrate layer from the loop stiffness value of the fire extinguishing body is 125 mN or less.
[3] The sheet-like fire extinguishing body according to [1] or [2], wherein the fire extinguishing layer includes a fire extinguishing agent and a binder, and the binder include a urethane resin.
[4] The sheet-like fire extinguishing body according to [3], wherein a content of the urethane resin is 50% by mass or more, based on a total amount of the binder.
[5] A fire extinguishing device including: the fire extinguishing body according to [3] or [4]; and a packaging bag accommodating the fire extinguishing body, wherein a resin film included in the packaging bag includes the fire extinguishing agent.
[6] The sheet-like fire extinguishing body according to [1] or [2], wherein the fire extinguishing layer includes a fire extinguishing agent and a binder, and the binder includes a polyvinyl butyral resin and an epoxy resin.
[7] The sheet-like fire extinguishing body according to [6], wherein the polyvinyl butyral resin is a main component of the binder, and a content of the epoxy resin is 5% by mass or more and 45% by mass or less, based on a total amount of the binder.
[8] A fire extinguishing device including: the fire extinguishing body according to [7]; and a packaging bag accommodating the fire extinguishing body, wherein a content of the epoxy resin is 20% by mass or more, based on a total amount of the binder, and a resin film included in the packaging bag includes the fire extinguishing agent.
[9] The fire extinguishing body according to any one of [1] to [4], [6] and [7], or the fire extinguishing device according to [5] or [8], wherein the substrate layer includes a plurality of resin layers, and among the plurality of resin layers, a resin layer farther from the fire extinguishing layer, lower a melting point has.
[10] The fire extinguishing body according to any one of [1] to [4], [6], [7] and [9], or the fire extinguishing device according to [5] or [8], wherein a thickness of the fire extinguishing body is 50 µm or more and 500 µm or less, and a thickness of the substrate layer is 30 µm or more and 150 µm or less.
[11] The fire extinguishing body according to any one of [1] to [4], [6], [7], [9] and [10], or the fire extinguishing device according to [5] or [8], wherein a ratio of the thickness of the fire extinguishing layer to the thickness of the substrate layer is 80% or more and 200% or less.
[12] The fire extinguishing body according to any one of [1] to [4], [6], [7], [9], [10] and [11], or the fire extinguishing device according to [5] or [8], wherein a loop stiffness value of the fire extinguishing layer is 60 mN or more and 200 mN or less.

However, an aspect of the present disclosure is not limited to the above-described embodiment and the above [1] to [12]. An aspect of the present disclosure can be further modified without departing from the scope thereof. For example, in the above-described embodiment, the fire extinguishing body has one fire extinguishing layer, but is not limited thereto. For example, the fire extinguishing body may have two or more fire extinguishing layers. In this case, for example, a fire extinguishing layer may be provided on each of both surfaces of the substrate layer.

### Examples

Hereinafter, the present disclosure will be described more specifically based on examples, but the present disclosure is not limited to the following examples.

### [Forming Fire Extinguishing Body]

### (Example 1)

First, a composition for forming a fire extinguishing body was prepared by mixing the following materials at the following blending ratio as a fire extinguishing agent.
- Fire extinguishing agent component: A mixture of potassium chlorate and tripotassium citrate: 87 parts by mass
- First binder: Polyvinyl butyral resin solution (a solution in which 11 parts by mass of polyvinyl butyral resin was dissolved in 80 parts by mass of ethanol and 9 parts by mass of isopropyl alcohol): 73 parts by mass
- Second binder: Epoxy resin (DENACOL EX-991L, manufactured by Nagase ChemteX Corporation): 5 parts by mass
- Ethanol: 87 parts by mass
The mixture of potassium chlorate and tripotassium citrate which is a salt having deliquescence, was ground in an agate mortar, then filtered with an 800-count mesh to adjust the particle diameter D50 to 12 µm, and then mixed.

The above composition for forming a fire extinguishing body was applied onto one surface of a substrate layer made of polyethylene terephthalate (PET) with a thickness of 50 µm (product name: E7002, manufactured by Toyobo Co., Ltd.) using an applicator so that the thickness of the fire extinguishing layer after drying would be 120 µm, and then dried in an oven at 75°C for 7 minutes. Thereby, a sheet-like fire extinguishing layer was formed on the surface of the substrate layer to obtain a fire extinguishing body.

### (Example 2)

A fire extinguishing material was obtained in the same manner as in Example 1, except that each material was prepared as follows, and that the composition for forming a fire extinguishing body was applied onto the surface of the substrate layer so that the thickness of the fire extinguishing layer after drying would be 90 µm.
- Fire extinguishing agent component: A mixture of potassium chlorate and tripotassium citrate: 87 parts by mass
- Binder: Ether-based polyurethane resin solution (a solution in which 100 parts by mass of ether-based polyurethane resin was dissolved in 210 parts by mass of isopropyl alcohol): 41 parts by mass
- Ethanol: 87 parts by mass

### (Example 3)

A fire extinguishing body was produced in the same manner as in Example 2, except that the composition for forming a fire extinguishing body was applied onto the surface of the substrate layer so that the thickness of the fire extinguishing layer after drying would be 120 µm.

### (Example 4)

A fire extinguishing body was produced in the same manner as in Example 2, except that the composition for forming a fire extinguishing body was applied onto the surface of the substrate layer so that the thickness of the fire extinguishing layer after drying would be 200 µm.

### (Example 5)

A fire extinguishing material was obtained in the same manner as in Example 1, except that each material was prepared as follows.
- Fire extinguishing agent component: A mixture of potassium chlorate and tripotassium citrate: 87 parts by mass
- Binder: Polyvinyl butyral resin solution (a solution in which 11 parts by mass of polyvinyl butyral resin was dissolved in 80 parts by mass of ethanol and 9 parts by mass of isopropyl alcohol): 118 parts by mass
- Ethanol: 87 parts by mass

### (Example 6)

A fire extinguishing material was obtained in the same manner as in Example 1, except that each material was prepared as follows.
- Fire extinguishing agent component: A mixture of potassium chlorate and tripotassium citrate: 87 parts by mass
- First binder: Polyvinyl butyral resin solution (a solution in which 11 parts by mass of polyvinyl butyral resin was dissolved in 80 parts by mass of ethanol and 9 parts by mass of isopropyl alcohol): 109 parts by mass
- Second binder: Epoxy resin (DENACOL EX-991L, manufactured by Nagase ChemteX Corporation): 1 part by mass
- Ethanol: 87 parts by mass

### (Example 7)

A fire extinguishing body was produced in the same manner as in Example 1, except that the thickness of the substrate layer was 75 µm, and that the composition for forming a fire extinguishing body was applied onto the surface of the substrate layer so that the thickness of the fire extinguishing layer after drying would be 60 µm.

### (Example 8)

A fire extinguishing body was produced in the same manner as in Example 1, except that the thickness of the substrate layer was 75 µm.

### (Example 9)

A fire extinguishing body was produced in the same manner as in Example 1, except that the thickness of the substrate layer was 100 µm.

### (Comparative Example 1)

A fire extinguishing body was produced in the same manner as in Example 2, except that the composition for forming a fire extinguishing body was applied onto the surface of the substrate layer so that the thickness of the fire extinguishing layer after drying would be 60 µm.

### (Comparative Example 2)

A fire extinguishing material was obtained in the same manner as in Example 1, except that each material was prepared as follows.
- Fire extinguishing agent component: A mixture of potassium chlorate and tripotassium citrate: 87 parts by mass
- First binder: Polyvinyl butyral resin solution (a solution in which 11 parts by mass of polyvinyl butyral resin was dissolved in 80 parts by mass of ethanol and 9 parts by mass of isopropyl alcohol): 36 parts by mass
- Second binder: Epoxy resin (DENACOL EX-991L, manufactured by Nagase ChemteX Corporation): 9 parts by mass
- Ethanol: 87 parts by mass

### (Comparative Example 3)

A fire extinguishing body was produced in the same manner as in Example 1, except that the thickness of the substrate layer was 25 µm, and that the composition for forming a fire extinguishing body was applied onto the surface of the substrate layer so that the thickness of the fire extinguishing layer after drying would be 60 µm.

### (Comparative Example 4)

A fire extinguishing body was produced in the same manner as in Example 1, except that the thickness of the substrate layer was 25 µm.

### (Comparative Example 5)

A fire extinguishing body was produced in the same manner as in Example 1, except that the thickness of the substrate layer was 100 µm, and that the composition for forming a fire extinguishing body was applied onto the surface of the substrate layer so that the thickness of the fire extinguishing layer after drying would be 60 µm.

### (Comparative Example 6)

A fire extinguishing body was produced in the same manner as in Example 1, except that the thickness of the substrate layer was 250 µm, and that the composition for forming a fire extinguishing body was applied onto the surface of the substrate layer so that the thickness of the fire extinguishing layer after drying would be 30 µm.

### [Method for Measuring Loop Stiffness Value]

The loop stiffness value was measured using a Loop Stiffness Tester DA-S manufactured by Toyo Seiki Seisaku-sho, Ltd. Specifically, the loop stiffness value was measured as follows. First, a test film with a width of 15 mm and a length of 200 mm was prepared. Next, both ends of the test film were fixed with chucks to form a loop with a loop length of 85 mm. This loop was compressed by a pressor under the conditions of a compression speed of 3.3 mm/min, a compression time of 3 seconds, and a compression distance of 20 mm, and the load on the pressor at that time was measured. The maximum value of the load measured in this test was adopted as the loop stiffness value. The compression distance represents the distance when the pressor and the chuck are closest to each other. Tables 1 and 2 show the loop stiffness values measured for the substrate layers and the fire extinguishing bodies in Examples 1 to 9 and Comparative Examples 1 to 6.

### [Enclosure of Fire Extinguishing Body]

A barrier film including a sealant layer (L-LDPE (linear low-density polyethylene) resin, thickness 30 µm) and a substrate layer (PET resin with a silica vapor-deposited film, thickness 12 µm) was prepared. The water vapor transmission rate of the barrier film was 0.2 to 0.6 g/m² /day (under conditions of 40°C/90% RH). Using two sheets of this barrier film, the sheet-like fire extinguishing body was covered, and the four sides of the barrier film were heat-sealed to produce a fire extinguishing device as an evaluation sample. The heat-sealing conditions were 140°C for 2 seconds.

The following evaluations were performed on the evaluation samples of Examples 1 to 9 and Comparative Examples 1 to 6 obtained by the above method.

### [Fire Extinguishing Test]

An iron container with a length of 20 cm, a width of 30 cm, and a height of 40 cm was prepared. On each side of the container, a circular vent hole with a diameter of 8.5 mm was provided at a position 5 cm away from the top surface in the height direction. Similarly, circular vent holes with a diameter of 8.5 mm were also provided on each side of the container at a position 12.5 cm away from the top surface, a position 20.0 cm away from the top surface, a position 27.5 cm away from the top surface, and a position 35.0 cm away from the top surface, all in the height direction. A fire extinguishing body with an area of 50 mm by 50 mm was attached to the center of the top surface of the container with double-sided tape. 1.5 g of solid fuel (solid fuel Fire Block igniter manufactured by CAPTAIN STAG CO., LTD.) with a length of 15 mm, a width of 15 mm, and a height of 10 mm was placed in the container so that the distance from the fire extinguishing body in the height direction would be 8 cm. At this time, the fire extinguishing body and the solid fuel were positioned so as to overlap in the height direction. An evaluation was made as to whether the fire extinguishing material could extinguish the solid fuel within 180 seconds after ignition of the solid fuel. The evaluation was performed based on the following criteria. The evaluation results are shown in Tables 1 and 2.
A: The fire extinguishing body extinguished the solid fuel within 180 seconds after ignition of the solid fuel.
B: The fire extinguishing body could not extinguish the solid fuel within 180 seconds after ignition of the solid fuel.

### [Evaluation of Processability]

Using an arbitrary cutting machine, cutting was performed at a speed of 5 m/min for every 190 mm of feed amount. The evaluation was performed based on the following criteria. The evaluation results are shown in Tables 1 and 2.
A: The sheet-like fire extinguishing body was conveyed without deflection.
B: The cut sheet-like fire extinguishing body deflected, and variations occurred in the dimensional accuracy of the fire extinguishing body after cutting.

### [Evaluation of Cracks]

After forming the fire extinguishing body, whether cracks occurred on the surface of the fire extinguishing layer was visually checked. The evaluation was performed based on the following criteria. The evaluation results are shown in Tables 1 and 2.
A: No cracks occurred on the surface of the fire extinguishing layer.
B: The maximum width of the cracks that occurred on the surface of the fire extinguishing layer was less than 3 mm.
C: The maximum width of the cracks that occurred on the surface of the fire extinguishing layer was 3 mm or more.

**[Table 1]**

| | | Example 1 | Example 2 | Example 3 | Example 4 | Example 5 | Example 6 | Example 7 | Example 8 |
|---|---|---|---|---|---|---|---|---|---|
| Substrate layer | Type | PET | PET | PET | PET | PET | PET | PET | PET |
| | Thickness (µm) | 50 | 50 | 50 | 50 | 50 | 50 | 75 | 75 |
| | Loop stiffness value (mN) | 32 | 32 | 32 | 32 | 32 | 32 | 114 | 114 |
| First binder | Type | PVB | Urethane | Urethane | Urethane | PVB | PVB | PVB | PVB |
| | Amount (parts by mass) | 8 | 13 | 13 | 13 | 13 | 12 | 8 | 8 |
| Second binder | Type | Epoxy | - | - | - | - | Epoxy | Epoxy | Epoxy |
| | Amount (parts by mass) | 5 | - | - | - | - | 1 | 5 | 5 |
| Thickness of fire extinguishing body (µm) | | 170 | 140 | 170 | 250 | 170 | 170 | 135 | 195 |
| Thickness of fire extinguishing layer (µm) | | 120 | 90 | 120 | 200 | 120 | 120 | 60 | 120 |
| Ratio of fire extinguishing layer thickness to substrate layer thickness (%) | | 240 | 180 | 240 | 400 | 240 | 240 | 80 | 160 |
| Loop stiffness value of fire extinguishing body (mN) | | 66 | 50 | 92 | 308 | 234 | 156 | 114 | 134 |
| Value obtained by subtracting loop stiffness value of substrate layer from loop stiffness value of fire extinguishing body (mN) | | 34 | 18 | 60 | 276 | 202 | 124 | 0 | 20 |
| Fire extinguishing performance | | A | A | A | A | A | A | A | A |
| Processability | | A | A | A | A | A | A | A | A |
| Cracks | | A | A | A | A | A | C | A | A |

**[Table 2]**

| | | Comparative Example 1 | Comparative Example 2 | Comparative Example 3 | Comparative Example 4 | Comparative Example 5 | Comparative Example 6 |
|---|---|---|---|---|---|---|---|
| Substrate layer | Type | PET | PET | PET | PET | PET | PET |
| | Thickness (µm) | 50 | 50 | 25 | 25 | 100 | 250 |
| | Loop stiffness value (mN) | 32 | 32 | 4 | 4 | 278 | 3882 |
| First binder | Type | Urethane | PVB | PVB | PVB | PVB | PVB |
| | Amount (parts by mass) | 13 | 4 | 8 | 8 | 8 | 8 |
| Second binder | Type | - | Epoxy | Epoxy | Epoxy | Epoxy | Epoxy |
| | Amount (parts by mass) | - | 9 | 5 | 5 | 5 | 5 |
| Thickness of fire extinguishing body (µm) | | 110 | 170 | 85 | 145 | 160 | 280 |
| Thickness of fire extinguishing layer (µm) | | 60 | 120 | 60 | 120 | 60 | 30 |
| Ratio of fire extinguishing layer thickness to substrate layer thickness (%) | | 120 | 240 | 240 | 480 | 60 | 12 |
| Loop stiffness value of fire extinguishing body (mN) | | 48 | 34 | 6 | 16 | 282 | 3936 |
| Value obtained by subtracting loop stiffness value of substrate layer from loop stiffness value of fire extinguishing body (mN) | | 16 | 2 | 2 | 12 | 4 | 54 |
| Fire extinguishing performance | | A | A | A | A | B | B |
| Processability | | B | B | B | B | A | A |
| Cracks | | A | A | A | A | A | A |

The fire extinguishing bodies in Examples 1 to 9 were excellent in fire extinguishing performance and processability because the loop stiffness values of the fire extinguishing bodies were 50 mN or more and the ratios of the thickness of the fire extinguishing layer to the thickness of the substrate layer were 80% or more. In Example 7, the value obtained by subtracting the loop stiffness value of the substrate layer from the loop stiffness value of the fire extinguishing body is calculated to be 0 mN. When the loop stiffness value of the substrate layer is dominant in the loop stiffness value of the fire extinguishing body, such a calculation result (measurement error) is obtained. Therefore, it is not necessarily the case that the loop stiffness value of the fire extinguishing body excluding the substrate layer is actually 0 mN. In addition, although cracks occurred on the surface of the fire extinguishing layer in the fire extinguishing body of Example 5, the cracks had almost no effect on the fire extinguishing performance and processability of the fire extinguishing body.

On the other hand, the fire extinguishing bodies in Comparative Examples 1 to 4 were not excellent in processability because the loop stiffness values of the fire extinguishing bodies were less than 50 mN. The fire extinguishing bodies in Comparative Examples 5 to 6 were not excellent in fire extinguishing performance because the ratios of the thickness of the fire extinguishing layer to the thickness of the substrate layer were less than 80%.

### Reference Signs List

1; substrate layer
2; fire extinguishing layer
10; fire extinguishing device
11; fire extinguishing body
12; packaging bag.

## Claims

1. A sheet-like fire extinguishing body comprising a substrate layer and a fire extinguishing layer layered with each other,
wherein a loop stiffness value of the fire extinguishing body is 50 mN or more, and
wherein a ratio of a thickness of the fire extinguishing layer to a thickness of the substrate layer is 80% or more.

2. The sheet-like fire extinguishing body according to claim 1,
wherein a value obtained by subtracting a loop stiffness value of the substrate layer from a loop stiffness value of the fire extinguishing body is 125 mN or less.

3. The sheet-like fire extinguishing body according to claim 1 or 2,
wherein the fire extinguishing layer includes a fire extinguishing agent and a binder, and
wherein the binder includes a urethane resin.

4. The sheet-like fire extinguishing body according to claim 3,
wherein a content of the urethane resin is 50% by mass or more, based on a total amount of the binder.

5. A fire extinguishing device comprising:
the fire extinguishing body according to claim 3; and
a packaging bag accommodating the fire extinguishing body,
wherein a resin film included in the packaging bag includes the fire extinguishing agent.

6. The sheet-like fire extinguishing body according to claim 1 or 2,
wherein the fire extinguishing layer includes a fire extinguishing agent and a binder,
wherein the binder includes a polyvinyl butyral resin and an epoxy resin.

7. The sheet-like fire extinguishing body according to claim 6,
wherein the polyvinyl butyral resin is a main component of the binder, and
wherein a content of the epoxy resin is 5% by mass or more and 45% by mass or less, based on a total amount of the binder.

8. A fire extinguishing device comprising:
the fire extinguishing body according to claim 7; and
a packaging bag accommodating the fire extinguishing body,
wherein a content of the epoxy resin is 20% by mass or more, based on a total amount of the binder, and
wherein a resin film included in the packaging bag includes a fire extinguishing agent.

9. The sheet-like fire extinguishing body according to claim 1 or 2,
wherein the substrate layer includes a plurality of resin layers, and
wherein among the plurality of resin layers, a resin layer farther from the fire extinguishing layer, lower a melting point has.

10. The sheet-like fire extinguishing body according to claim 1 or 2,
wherein a thickness of the fire extinguishing body is 50 µm or more and 500 µm or less, and
wherein a thickness of the substrate layer is 30 µm or more and 150 µm or less.

11. The sheet-like fire extinguishing body according to claim 1 or 2,
wherein a ratio of the thickness of the fire extinguishing layer to the thickness of the substrate layer is 80% or more and 200% or less.

12. The sheet-like fire extinguishing body according to claim 1 or 2,
wherein a loop stiffness value of the fire extinguishing layer is 60 mN or more and 200 mN or less.
